# EUROPÄISCHE PATENTSCHRIFT

(11) **EP 2 689 741 B1**
(45) Veröffentlichungstag und Bekanntmachung des Hinweises auf die Patenterteilung: **04.01.2017**
(21) Anmeldenummer: 13176856.6
(22) Anmeldetag: 17.07.2013
(51) Int. Cl.: A61C 1/18, A61C 1/00, F16L 25/12

(54) **Kupplungsvorrichtung zur Verbindung eines Versorgungsschlauches für zahnmedizinische Instrumente mit einer Versorgungs- und Steuereinheit**
Coupling device for connecting a supply hose for dental instruments with a supply and control unit
Dispositif d'accouplement pour relier un tuyau d'alimentation pour des instruments de médecine dentaire à une unité d'alimentation et de commande

(30) Priorität: 23.07.2012 DE 102012106666
(43) Veröffentlichungstag der Anmeldung: 29.01.2014
(73) Patentinhaber: MEDTRONIC medizinisch-elektronische Gerätegesellschaft mbH, 61276 Weilrod (DE)
(72) Erfinder: Schmidt, Alfred, 61250 Usingen (DE)
(74) Vertreter: Glück Kritzenberger Patentanwälte PartGmbB

(56) Entgegenhaltungen:
- EP-A1- 1 486 180
- WO-A2-01/54611

## Beschreibung

Die Erfindung betrifft eine Kupplungsvorrichtung zur Verbindung eines Versorgungsschlauches für zahnmedizinische Instrumente mit einer Versorgungs- und Steuereinheit gemäß dem Oberbegriff des Patentanspruches 1 Vorteilhafte Ausführungsformen der Erfindung gehen aus den abhängigen Patentansprüchen hervor.

Zum Anschluss von zahnärztlichen Instrumenten, insbesondere elektrisch und/oder pneumatisch betriebenen zahnärztlichen Instrumenten sind Kupplungsvorrichtungen zur Verbindung des jeweiligen zahnärztlichen Instruments über einen Versorgungsschlauch mit einer Versorgungs- und Steuereinheit bekannt. Ein zahnärztliches Instrument besteht üblicherweise aus einem Handstückteil und einem darin aufgenommenen Behandlungswerkzeug, beispielsweise in Form eines Bohrers oder dergleichen. Auch wird unter einem zahnärztlichen Instrument ein vorzugsweise in Ultraschalltechnologie realisierter Zahnsteinentferner oder ein Spülinstrument verstanden. Genannte zahnärztlichen Instrumente weisen in Ihrem jeweiligen Handstückteil elektrisch oder pneumatisch betriebene Motoreinheiten oder Ultraschalleinheiten auf, welche mittels des Versorgungsschlauches von der Versorgungs- und Steuereinheit mit den zum Betrieb erforderlichen Fluiden, elektrischer Energie und/oder elektrischen Steuersignalen versorgt werden.

Kupplungsvorrichtungen können sowohl an dem der Versorgungs- und Steuereinheit zugeordneten steuerseitigen Ende als auch dem instrumentenseitigen Ende des Versorgungsschlauches vorgesehen sein.

Beispielsweise beschreibt die EP 1 486 180 A1, auf welche Offenbarung die zweiteilige Form des Anspruchs 1 basiert, eine Kupplungsvorrichtung zum Verbinden mehrerer Versorgungsleitungen mit einem zahnmedizinischen Handstück. Die Kupplungsvorrichtung weist dabei mehrere Einlässe zur Verbindung mit je einer Versorgungsleitung und einen Auslass zur Verbindung mit einer in das zahnmedizinische Handstück mündenden Flüssigkeitsleitung auf. In der Kupplungsvorrichtung sind mehrere Flüssigkeitskanäle zur Verbindung der Einlässe mit dem Auslass vorgesehen, wobei sich wenigstens einer der Flüssigkeitskanäle in axialer Richtung und wenigstens ein weiterer der Flüssigkeitskanäle in transversaler Richtung erstreckt. Die Flüssigkeitskanäle stehen über zumindest eine Öffnung in kommunizierender fluider Verbindung, wobei mindestens einer der Flüssigkeitskanäle mit einem Ventil ausgestattet ist, über welches der Rückfluss von Flüssigkeit zum Einlass verhindert wird.

Ferner offenbart die WO 01/54611 A2 eine Kupplungsvorrichtung aufweisend eine Ventileinheit zum Verbinden eines Versorgungsschlauches mit einem zahnmedizinischen Handstück. Die Ventileinheit weist mehrere axiale Leitungskanäle auf und ist in der Kupplungsvorrichtung in einer Kupplungshülse aufgenommen, welche an einer Seite über ein Gewinde auf ein Ansatzstück des zahnmedizinischen Handstückes aufschraubbar ist und an der gegenüberliegenden Seite mit dem Versorgungsschlauch verbindbar ist. Am Ansatzstück des Handstückes sind Anschlussstutzen für die im Handstück geführten Leitungskanäle ausgebildet, welche im Kupplungszustand in Art einer Steckverbindung in die Leitungskanäle der Ventileinheit eingreifen. An dem dem Versorgungsschlauch zugewandten Ende der Ventileinheit enden die in der Ventileinheit ausgebildeten Leitungskanäle wiederum in Anschlussstutzen, die wiederum in Art einer Steckverbindung mit Fluidkanälen im Versorgungsschlauch verbindbar sind. In der Ventileinheit ist neben den axialen Leitungskanälen zumindest ein Transversalkanal vorgesehen, der mit einem beweglichen Kolben ausgestattet ist und der eine fluide Verbindung zwischen den Leitungskanälen ausbildet. Durch Bewegung des Kolbens wird die Durchströmung des Transversalkanals und somit der Fluidtransport von einem Leitungskanal zu einem anderen Leitungskanal gesteuert.

Grundsätzlich ist es wünschenswert, die beispielsweise zum Antrieb eines zahnmedizinischen Instrumentes erforderliche Druckluft genau dann bereitzustellen, wenn diese für den Betrieb des Gerätes erforderlich ist. Auch ist bei bekannten pneumatisch betriebenen Versorgungs- und Steuereinheiten, über welche mehrere, vorzugsweise unterschiedliche Funktionen aufweisende zahnmedizinische Geräte betreibbar sind eine aufwendige pneumatische Steuerung und zugehörige Verkabelung erforderlich, welche gegebenenfalls durch elektronische Steuerkomponenten ergänzt wird. Von besonderer Bedeutung ist hierbei ein ordnungsgemäßer Betrieb der Versorgungs- und Steuereinheit sowie der angeschlossenen zahnmedizinischen Geräte. Insbesondere ist es wünschenswert, dass lediglich das aktuell in Benutzung befindliche zahnmedizinische Gerät betriebsbereit ist und die verbleibenden, in der Versorgungs- und Steuereinheit vorzugsweise mittels entsprechender Halterungen aufgenommenen zahnmedizinischen Geräten abgeschaltet sind.

Aufgabe der Erfindung ist es daher, eine Kupplungsvorrichtung zur Verbindung eines zahnmedizinischen Versorgungsschlauches mit einer Versorgungs- und Steuereinheit bereitzustellen, welche eine gesteuerte Zuführung von zumindest einem Fluid, elektrischer Energie und Steuersignalen ermöglicht. Die Aufgabe wird ausgehend von den Merkmalen des Oberbegriffes des Patentanspruches 1 durch dessen kennzeichnende Merkmale gelöst.

Der wesentliche Aspekt des erfindungsgemäßen ist darin zu sehen, dass die Kupplungsvorrichtung in Form einer schaltbaren Ventil-Kupplung ausgebildet ist. Hierzu bildet der erste Kupplungskörper einen in der Kupplungsmuffe geführten Ventilkolbenkörper, der durch Beaufschlagung mit Druckluft axial verschiebbar ist. Der zweite Kupplungskörper ist vorzugsweise ortsfest in der Kupplungsmuffe aufgenommen. Besonders vorteilhaft kann durch die erfindungsgemäße Realisierung der Kupplungsvorrichtung als schaltbare Ventil-Kupplung durch Zuführung von Druck- bzw. Schaltluft von einem nicht durchgeschalteten in einen geöffneten bzw. geschalteten Zustand überführt werden und dies ohne hohen steuertechnischen Aufwand.

In einer vorteilhaften Ausführungsvariante sind im ersten Kupplungskörper erste Fluidkanäle und im zweiten Kupplungskörper zweite Fluidkanäle vorgesehen, die sich jeweils entlang der Längsachsen der Kupplungskörper achsgleich zueinander erstrecken. In den ersten und zweiten Fluidkanälen sind jeweils abschnittweise stabförmige Ventilkolben (17) mit einem ersten und zweiten Ventilkolbenabschnitt aufgenommen.

Weiterhin vorteilhaft ist im nicht durchgeschalteter Betriebszustand der Kupplungsvorrichtung der erste Kupplungskörper beabstandet zum zweiten Kupplungskörper in der Kupplungsmuffe angeordnet, wobei der erste Kupplungskörper durch Beaufschlagung mit einer Vorspannung in dieser Position gehalten wird. In der steuerseitigen Wandung der Kupplungsmuffe ist insbesondere eine Bohrung zur Zuführung der Druckluft bzw. Steuerluft in einen durch die Kupplungsmuffe und den ersten Kupplungskörper eingeschlossenen ringförmigen Ventilraumes vorgesehen, die sich entlang der Längsachse von der steuerseitigen Stirnseite der Kupplungsmuffe zum ringförmigen Ventilraum erstreckt.

Gemäß einer vorteilhaften Weiterbildung der Erfindung verfügt der stabförmige Ventilkolben über eine Innenbohrung, die sich entlang der Kolbenlängsachse erstreckt, und zwar ausgehend von einer quer zur Kolbenlängsachse verlaufende Zulaufbohrung mit zwei gegenüberliegenden Zulauföffnungen und einer stirnseitigen Auslauföffnung. Ein die beiden seitlichen Zulauföffnungen aufweisende erster Ventilkolbenabschnitt ist in einem Fluidkanal des ersten Kupplungskörpers und ein die stirnseitige Auslauföffnung aufweisender zweiter Ventilkolbenabschnitt im achsgleich angeordneten Fluidkanal des zweiten Kupplungskörpers jeweils zumindest teilweise aufgenommen. Abhängig von der Kolbenposition des als Ventilkolbenkörper ausgebildeten ersten Kupplungskörpers sind die Zulauföffnungen des ersten Ventilkolbenabschnittes freigegeben oder fluiddicht verschlossen.

Vorteilhaft weisen die im ersten Kupplungskörper vorgesehenen ersten Fluidkanäle jeweils einen ersten Kanalabschnitt und einen unmittelbar daran anschließenden zweiten Kanalabschnitt auf, wobei der Innendurchmesser des ersten Kanalabschnittes größer als der Innendurchmesser des zweiten Kanalabschnittes gewählt ist. Im nicht durchgeschalteter Betriebszustand befinden sich die Zulauföffnungen des ersten Ventilkolbenabschnittes jeweils im Bereich des zweiten Kanalabschnitt und sind damit verschlossen. Im geöffneten bzw. durchgeschalteten Betriebszustand befinden sich die Zulauföffnungen des ersten Ventilkolbenabschnittes im Bereich des ersten Kanalabschnittes und werden damit freigegeben. Hierbei ist der stabförmige Ventilkolben mit seinem zweiten Ventilkolbenabschnittlage- oder positionsfest im jeweils zweiten Fluidkanal des zweiten Kupplungskörpers aufgenommen.

Gemäß einer weiteren vorteilhaften Weiterbildung der Erfindung weisen zur Herstellung der elektrischen Steckverbindungen der erste und zweite Kupplungskörper parallel zu den ersten und zweiten Fluidkanälen verlaufende, ebenfalls achsgleich angeordnete erste und zweite Bohrungen auf, wobei jeweils in einer ersten Bohrung ein Kontaktstiftelement und in einer gegenüberliegenden achsgleichen zweiten Bohrung ein Kontaktbuchsenelement angeordnet sind.

Vorteilhaft weist zweite Kupplungskörper einen ersten und zweiten Kupplungskörperabschnitt mit unterschiedlichem Außendurchmesser auf. Insbesondere ist der Außendurchmesser des ersten Kupplungskörperabschnittes größer als der des zweiten Kupplungskörperabschnittes, wobei der erste Kupplungskörperabschnittes in der Kupplungsmuffe geführt ist.

In einer Weiterbildung der Erfindung schließt sich an den zweiten Kupplungskörper schlauchseitig ein schlauchseitiges Adapterkupplungselement an, welches vorzugsweise Teil des Versorgungsschlauches ist. Ferner umfasst die Kupplungsmuffe einen umlaufenden Randabschnitt und einen daran anschließenden im Querschnitt reduzierten Muffenabschnitt, welcher vorzugsweise an der Außenfläche ein Schraubgewinde aufweist, auf das ein Mutterelement aufschraubbar ist. An das Mutterelement schließt sich entlang der Längsachse in Richtung des schlauchseitigen Anschlussbereiches eine Befestigungshülse an, welche ebenfalls auf das Außengewinde der Kupplungsmuffe aufschraubbar ist.

Auch kann ein steuerseitig angeordnetes Anschlussadapterelement vorgesehen sein, über welches zumindest die Zuführung der Fluida in die ersten Fluidkanäle des einen Ventilkolben bildenden ersten Kupplungskörpers erfolgt. Das Anschlussadapterelement weist senkrecht zur Längsachse verlaufende Durchführungskanäle auf, die jeweils mit parallel zur Längsachse verlaufenden Zuführungskanälen verbunden sind, welche achs- und positionsgleich zu den ersten Fluidkanälen des ersten Kupplungskörpers angeordnet sind. Im Bereich der Kreuzungspunkte der Durchführungs- und Zuführungskanäle sind vorteilhaft jeweils Dosiermittel vorgesehen, über welche die Zuführmenge des jeweils zugeführten Fluides einstellbar ist.

In einer bevorzugten Ausführungsvariante ist vorgesehen, dass zumindest drei erste Fluidkanäle im ersten Kupplungskörper und zumindest drei zweite Fluidkanäle im zweiten Kupplungskörper zur Durchführung von Wasser, Antriebsluft und Blasluft durch die Kupplungsvorrichtung integriert sind.

Zudem ergeben sich Weiterbildungen, Vorteile und Anwendungsmöglichkeiten der Neuerung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Neuerung, unabhängig von ihrer Zusammenfassung in den Ansprüchen oder deren Rückbeziehung. Auch wird der Inhalt der Ansprüche zu einem Bestandteil der Beschreibung gemacht. Es zeigen:
- Fig. 1: beispielhaft eine schematische Seitenansicht einer zahnmedizinischen Vorrichtung,
- Fig. 2: beispielhaft eine perspektivischen Ansicht einer erfindungsgemäßen Kupplungsvorrichtung,
- Fig. 3: beispielhaft eine Explosionsdarstellung der erfindungsgemäßen Kupplungsvorrichtung gemäß Figur 2,
- Fig. 4: beispielhaft eine stirnseitige Ansicht der erfindungsgemäßen Kupplungsvorrichtung,
- Fig. 5: beispielhaft einen Schnitt entlang der Linie A-A durch die erfindungsgemäßen Kupplungsvorrichtung gemäß Figur 4,
- Fig. 6: beispielhaft eine stirnseitige Ansicht der erfindungsgemäßen Kupplungsvorrichtung und
- Fig. 7: beispielhaft einen Schnitt entlang der Linie B-B durch die erfindungsgemäßen Kupplungsvorrichtung gemäß Figur 6.

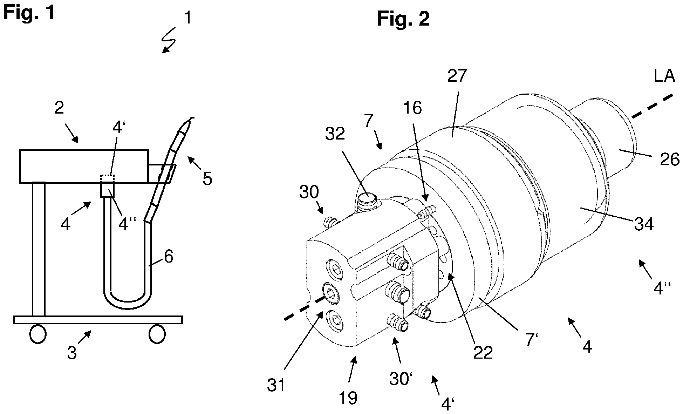

In Figur 1 ist beispielhaft eine zahnmedizinische Vorrichtung 1 dargestellt, welche zumindest eine Versorgungs- und Steuereinheit 2 aufweist. Die Versorgungs- und Steuereinheit 2 ist zur gesteuerten Bereitstellung von zumindest einem Fluid, elektrischer Energie und/oder Steuersignalen ausgebildet.

Eine zahnmedizinische Vorrichtung 1 kann beispielsweise einen fahrbaren Wagen 3 umfassen, auf dem die Versorgungs- und Steuereinheit 2 angeordnet ist. Alternativ kann die zahnmedizinische Vorrichtung 1 auch Teil einer zahnmedizinischen Behandlungseinheit sein, die beispielsweise schwenk- und/oder höhenverstellbar an einer Behandlungsstuhleinheit angeordnet ist (nicht in den Figuren dargestellt).

An die Versorgungs- und Steuereinheit 2 ist jeweils über eine erfindungsgemäße Kupplungsvorrichtung 4 ein zahnärztliches Instrument 5 anschließbar, und zwar über einen Versorgungsschlauch 6. Ausgehend von der Kupplungsvorrichtung 4 wird mittels des Versorgungsschlauches 6 eine Leitungsverbindung zur Übertragung von vorzugsweise mehrerer Fluida, elektrischer Energie und/oder Steuersignalen an das zahnärztliche Instrument 5 hergestellt. Vorzugsweise weist ein zahnmedizinisches Gerät 1 mehrere zahnärztliche Instrumente 5 auf, die jeweils über einen Versorgungsschlauch 6 und eine Kupplungsvorrichtung 4 an die Versorgungs- und Steuereinheit 2 angeschlossen sind. In Figur 1 ist beispielhaft zur Erläuterung des prinzipiellen Aufbaus einer erfindungsgemäßen Kupplungsvorrichtung 4 lediglich ein an die Versorgungs- und Steuereinheit 2 angeschlossenes zahnärztliches Instrument 5 dargestellt.

Unter einem zahnärztlichen Instrument 5 wird ein zahnärztliches Behandlungsinstrument beispielsweise eine Handstückeinheit mit einem darin auswechselbar aufgenommenen Behandlungswerkzeug, ein vorzugsweise in Ultraschalltechnologie realisierter Zahnsteinsteinentferner, eine Sprühpistole oder ein Absauginstrument verstanden. Zum Betrieb derartiger zahnärztlicher Instrumente 5 sind häufig unterschiedliche Fluida, elektrische Energie und/oder Steuersignale erforderlich. Vorzugsweise werden beispielsweise die Fluida Wasser, Blasluft und Antriebsluft, eine elektrische Versorgungsspannung und/oder elektrische oder pneumatische Steuersignale von der Versorgungs- und Steuereinheit 2 bereitgestellt. Der Versorgungsschlauch 6 weist an sich mehrere Schläuche sowie elektrische Verbindungskabel auf, über welche die mittels der Kupplungsvorrichtung 4 bereitgestellten Fluida, die elektrische Energie und die Steuersignale an das zahnmedizinische Instrument 6 übertragen werden.

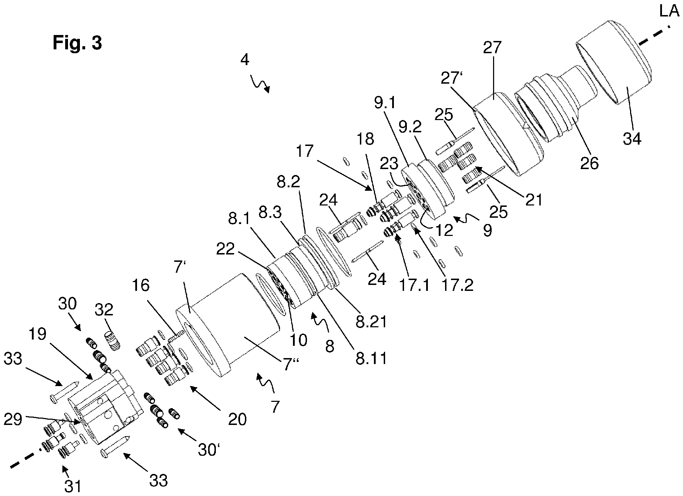

Figur 2 zeigt beispielhaft eine perspektivische Darstellung einer erfindungsgemäßen Kupplungsvorrichtung 4 und Figur 3 eine zughörige Explosionsdarstellung. Die Kupplungsvorrichtung 4 weist einen steuerseitigen Anschlussbereich 4' und einen schlauchseitigen Anschlussbereich 4" auf, wobei sich nach erfolgter Montage der Kupplungsvorrichtung 4 der steuerseitige Anschlussbereich 4' beispielsweise innerhalb des Gehäuses der Versorgungs- und Steuereinheit 2 und der schlauchseitige Anschlussbereich 4" außerhalb des Gehäuses der Versorgungs- und Steuereinheit 2 befindet.

Die Kupplungsvorrichtung 4 umfasst zumindest eine Kupplungsmuffe 7, in der zumindest teilweise ein erster Kupplungskörper 8 und teilweise ein zweiter Kupplungskörper 9 entlang der Längsachse LA der Kupplungsmuffe 7 bzw. der Kupplungsvorrichtung 4 aufgenommen sind, wobei der erste Kupplungskörper 8 mehrere erste Fluidkanäle 10 und erste elektrische Steckverbindungen 11 sowie der zweite Kupplungskörper 9 mehrere zweite Fluidkanäle 12 und zweite elektrische Steckverbindungen 13 aufweisen.

Erfindungsgemäß bildet die Kupplungsvorrichtung 4 eine schaltbare Ventil-Kupplung aus, mittels der die Fluidkanäle 10, 12 und die elektrischen Steckverbindungen 11, 13 vorzugsweise gleichzeitig durchschaltbar sind. Die Kupplungsvorrichtung 4 ist hierbei durch Beaufschlagung mit Druckluft schaltbar, d.h. von einem ersten Betriebszustand, bei dem keine leitende Verbindung zwischen den Fluidkanälen 10, 12 und den elektrischen Steckverbindungen 11, 13 zwischen dem ersten und zweiten Kupplungskörper 8, 9 besteht, in einen zweiten Betriebszustand, bei dem entsprechende Verbindungen durchgeschaltet sind, umschaltbar.

Hierzu ist der erste Kupplungskörper 8 axial, und zwar entlang der Längsachse LA der Kupplungsvorrichtung 4 bzw. der Kupplungsmuffe 7, verschiebbar in der Kupplungsmuffe 7 aufgenommen. Der erste Kupplungskörpers 8 wird durch die Kupplungsmuffe 7 axial geführt und ist im steuerseitigen Anschlussbereich 4' der Kupplungsvorrichtung 4 vorgesehen. Der zweite Kupplungskörper 9 schließt sich entlang der Längsachse LA an den ersten Kupplungskörper 8 in Richtung des schlauchseitigen Anschlussbereiches 4" an und ist im montierten Zustand lage- oder positionsfest in der Kupplungsmuffe 7 aufgenommen. Bei nicht durchgeschalteter Kupplungsvorrichtung 4 ist der erste Kupplungskörper 8 beabstandet zum zweiten Kupplungskörper 9 in der Kupplungsmuffe 7 angeordnet. Im durchgeschalteten Zustand liegen die gegenüberliegenden Stirnseiten des ersten und zweiten Kupplungskörpers 9 aneinander an.

Der erste Kupplungskörpers 8 bildet erfindungsgemäß einen axial verschiebbarer Ventilkolbenkörper aus, der durch Beaufschlagung mit Druckluft von einer ersten Kolbenposition in eine zweite Kolbenposition und vice versa bewegbar ist.

Hierzu ist der erste Kupplungskörper 8 im Wesentlichen zylinderförmig ausgebildet und weist einen ersten Kupplungskörperabschnitt 8.1 und einen zweiten Kupplungskörperabschnitt 8.2 auf. Im vorliegenden Ausführungsbeispiel weist der erste Kupplungskörperabschnitt 8.1 im an den zweiten Kupplungskörperabschnitt 8.2 anschließenden Randabschnitt eine äußere umlaufende Nut 8.3 auf. Der erste und zweite Kupplungskörperabschnitt 8.1, 8.2 besitzen unterschiedliche Außendurchmesser und bilden damit eine gestufte Zylinderoberfläche, und zwar derart, dass der zweite Kupplungskörperabschnitt 8.2 einen radial von der Längsachse LA nach außen abstehenden, ringförmigen Randabschnitt mit einer in Richtung des ersten Kupplungskörperabschnittes 8.1 orientierten ringförmigen seitlichen Anschlagfläche 8.4 bildet.

Zur Ausbildung eines ringförmigen Ventilraumes 14 weist die Kupplungsmuffe 7 einen entlang der Längsachse LA gestuften Innenflächenverlauf auf. Dieser wird durch einen ersten und zweiten, entlang der Längsachse LA aneinander anschließenden Kupplungsmuffenabschnitt 7.1, 7.2 gebildet, wobei der erste Kupplungsmuffenabschnitt 7.1 einen kleineren Innendurchmesser als der zweite Kupplungsmuffenabschnitt 7.2 aufweist. Hierbei ist der Innendurchmesser des ersten Kupplungsmuffenabschnittes 7.1 an den Außendurchmesser des ersten Kupplungskörperabschnittes 8.1 und der Innendurchmesser des ersten Kupplungsmuffenabschnittes 7.2 an den Außendurchmesser des zweiten Kupplungskörperabschnittes 8.2 angepasst. Somit entsteht im Übergangsbereich zwischen dem ersten und zweiten Kupplungsmuffenabschnitt 7.1, 7.2 eine ringförmige Anschlagfläche 7.3, an der sich der zweite Kupplungskörperabschnitt 8.2 des ersten Kupplungskörpers 8 bzw. des ringförmige seitliche Anschlagfläche 8.4 in der ersten Kolbenposition abstützt.

Der ringförmige Ventilraum 14 wird somit von dem stufenförmigen Innenflächenabschnitt der Kupplungsmuffe 7 und dem stufenförmigen, die Nut 8.3 einschließenden Außenflächenabschnitt des ersten Kupplungskörpers 8 gebildet. Sowohl der erste als auch der zweite Kupplungskörperabschnitt 8.1, 8.2 weisen jeweils eine umlaufende Führungsnut 8.11, 8.21 zur Aufnahme eines umlaufenden Dichtungselements, vorzugsweise eines O-Ringes auf. Somit ergibt sich eine fluiddichte Verbindung zwischen der Außenfläche des ersten Kupplungskörpers 8 und der Innenfläche der Kupplungsmuffe 7.

Die Zuführung der Druckluft bzw. Steuerluft erfolgt über eine in der Wandung der Kupplungsmuffe 7 entlang der Längsachse LA von der steuerseitigen Stirnseite der Kupplungsmuffe 7 zum ringförmigen Ventilraumes 14 geführte Bohrung 15, bei der ausgangsseitig ein Doppelnippel 16 zum Anschluss eines Druckschlauches vorgesehen ist. Dieser bildet damit den Steuerlufteingang der Kupplungsvorrichtung 4 aus.

Zum gesteuerten Durchschalten einzelner Fluida ist zumindest ein Teil der ersten Fluidkanäle 10 des ersten Kupplungskörpers 8 mit einem Teil der zweiten Fluidkanäle 12 des zweiten Kupplungskörpers 9 jeweils kanalweise verbunden, und zwar jeweils über einen stabförmigen Ventilkolben 17. Der stabförmige Ventilkolben 17 verfügt über eine Innenbohrung, die sich entlang der Kolbenlängsachse erstreckt, und zwar ausgehend von einer quer zur Kolbenlängsachse verlaufende Zulaufbohrung 18 mit zwei gegenüberliegenden Zulauföffnungen und einer stirnseitigen Auslauföffnung. Der die beiden seitlichen Zulauföffnungen aufweisende erste Ventilkolbenabschnitt 17.1 ist hierbei in einem Fluidkanal 10 des ersten Kupplungskörpers 8 und der die stirnseitige Auslauföffnung aufweisen zweite Ventilkolbenabschnitt 17.2 im achsgleich angeordneten Fluidkanal 12 des zweiten Kupplungskörpers aufgenommen.

Abhängig von der Kolbenposition des als Ventilkolbenkörper ausgebildeten ersten Kupplungskörpers 8 werden die Zulauföffnungen des ersten Ventilkolbenabschnittes 17.1 freigegeben oder fluiddicht verschlossen und damit der Bereitstellung des jeweiligen Fluides über die zugeordneten Fluidkanäle 10, 12 gesteuert. Zur Realisierung dessen weisen die im ersten Kupplungskörper 8 vorgesehenen Fluidkanäle 10 jeweils einen ersten Kanalabschnitt 10.1 und einen unmittelbar daran anschließenden zweiten Kanalabschnitt 10.2 auf, wobei der Innendurchmesser des ersten Kanalabschnittes 10.1 größer als der Innendurchmesser des zweiten Kanalabschnittes 10.2 gewählt ist, so dass sich ein abgeschrägter stufenartiger Verlauf der Kanalinnenfläche ergibt. In der erster Kolbenposition befinden sich die Zulauföffnungen des ersten Ventilkolbenabschnittes 17.1 jeweils im zweiten Kanalabschnitt 10.2 und werden mittels zweier, die Zulauföffnungen einschließenden, in umlaufenden Führungsnuten aufgenommenen Dichtungselementen, vorzugsweise O-Ringen gegenüber der Kanalinnenfläche des zweiten Kanalabschnittes 10.2 abgedichtet.

In der zweiten Kolbenposition kommen die Zulauföffnungen des ersten Ventilkolbenabschnittes 17.1 im Bereich des ersten Kanalabschnittes 10.1 zu liegen und werden aufgrund des größeren Innendurchmessers freigegeben, so dass ein über den ersten Fluidkanal 10 des ersten Kupplungskörpers zugeführtes Fluid über die Zulauföffnungen in die Innenbohrung 18 zur Auslassöffnung des zweiten Ventilkolbenabschnittes 17.2 geführt wird und schließlich über den weiteren zweiten Fluidkanal 12 des zweiten Kupplungskörpers 9 an den schlauchseitigen Anschlussbereich 4" gelangt. Zum Anschluss von Verbindungsschläuchen oder eines Anschlussadapterelementes 19 sind die steuerseitigen Öffnungen der ersten Fluidkanäle 10 des ersten Kupplungskörpers 8 mit Verbindungsnippelelementen 20 versehen. Der Ventilkolben 17 ist vorzugsweise mit seinem zweiten Ventilkolbenabschnitt 17.2 lage- oder positionsfest im jeweiligen zweiten Fluidkanal 12 des zweiten Kupplungskörpers 9 aufgenommen.

Vorzugsweise ist zwischen jeweils einem steuerseitig in einem ersten Fluidkanal 10 aufgenommenen Verbindungsnippelelement 20 und dem ebenfalls darin befindlichen ersten Ventilkolbenabschnitt 17.1 des stabförmigen Ventilkolbens 17 ein Federelement (nicht in den Figuren dargestellt) vorgesehen, mittels dem eine axial wirkende Vorspannung über das lage- oder positionsfest im zweiten Kupplungskörpers 9 aufgenommene Ventilkolben 17 zwischen dem ersten und zweiten Kupplungskörper 8, 9 aufgebaut wird. Mittels der Vorspannung wird der als Ventilkolbenkörper ausgebildete erste Kupplungskörper 8 ohne Beaufschlagung mit Steuerluft in der ersten Kolbenposition gehalten, d.h. der zweite Kupplungskörperabschnitt 8.2 des ersten Kupplungskörpers 8 liegt randseitig an der Anschlagfläche 7.3 der Kupplungsmuffe 7 an. Bei Zuführung von Steuerluft wird der erste Kupplungskörpers 8 gegen die Vorspannung axial in die zweite Kolbenposition verschoben, und zwar gegen die dem ersten Kupplungskörper 8 zugewandte Stirnseite den zweiten Kupplungskörper 9 gedrückt.

Ferner sind in den schlauchseitigen Öffnungen der zweiten Fluidkanäle 12 des zweiten Kupplungskörpers 9 ebenfalls Verbindungsnippelelemente 21 aufgenommen, um den Anschluss von Verbindungsschläuchen zu ermöglichen. Im vorliegenden Ausführungsbeispiel sind drei erste Fluidkanäle 10 im ersten Kupplungskörper 8 und drei zweite Fluidkanäle 12 im zweiten Kupplungskörper 9 vorgesehen, über welche Wasser, Antriebsluft und Blasluft durch die Kupplungsvorrichtung 4 geführt wird. Zusätzlich ist noch jeweils ein weiterer Fluidkanal im ersten und zweiten Kupplungskörper 8, 9 vorgesehen, welcher keinen Ventilkolben 17 aufweist, sondern welche über einen Verbindungsnippelelement miteinander verbunden sind. Dieser durchgehende, nicht schaltbare weitere Fluidkanal ist zur Rückführung von Luft aus dem zahnmedizinischen Gerät 5 über den Versorgungsschlauch 6 vorgesehen.

Zur Herstellung der elektrischen Steckverbindungen 11, 13 weisen der erste und zweite Kupplungskörper 8, 9 ferner parallel zu den ersten und zweiten Fluidkanälen 10, 12 verlaufende, ebenfalls achsgleich angeordnete erste und zweite Bohrungen 22, 23 auf. Hierbei sind jeweils in der ersten Bohrung 22 ein Kontaktstiftelement 24 und in der gegenüberliegenden achsgleichen zweiten Bohrung 23 ein Kontaktbuchsenelement 25 zur technischen Realisierung der Steckverbindung 11, 13 vorgesehen.

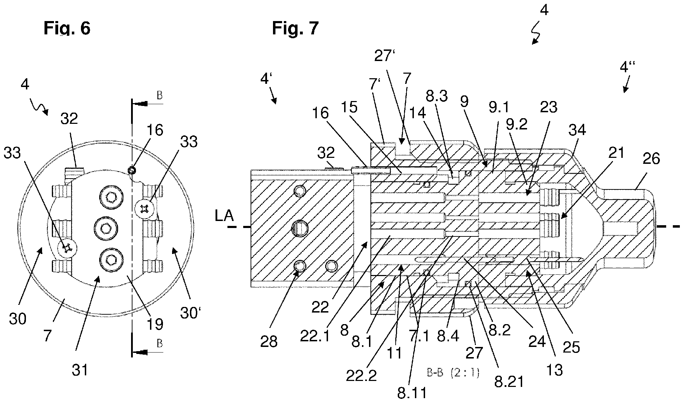

In einer bevorzugten Ausführungsvariante gemäß Figur 7 weisen die ersten Bohrungen 22 einen ersten steuerseitigen Bohrungsabschnitt 22.1 und einen daran anschließenden zweiten Bohrungsabschnitt 22.2 auf, wobei der Durchmesser der ersten Bohrung 22 im zweiten Bohrungsabschnitt 22.2 kleiner als im ersten Bohrungsabschnitt 22.1 gewählt ist. Das Kontaktstiftelement 24 wird im zweiten Bohrungsabschnitt 22.2 gehalten und ragt mit dem einem freien Ende in den ersten Bohrungsabschnitt 22.1 hinein und steht mit dem gegenüberliegenden weiteren freien Ende von der Stirnseite des ersten Kupplungskörper in Richtung der Längsachse LA nach außen ab, welches den Steckabschnitt der Steckerverbindung 11, 13 bildet.

Die gegenüberliegende zweite Bohrung 23 erstreckt sich ebenfalls entlang der Längsachse LA und weist durchgehend denselben Durchmesser auf, wobei dieser vorzugsweise mit dem Durchmesser des ersten Bohrungsabschnittes 22.1 der ersten Bohrung 22 übereinstimmt und zur Aufnahme des Kontaktbuchsenelementes 25 ausgebildet ist. In der vorliegenden Ausführungsvariante weist das Kontaktbuchsenelement 25 ein stiftartiges Ende auf, mit welchem es von der Stirnseite des zweiten Kupplungskörpers 9 schlauchseitig in Richtung der Längsachse LA absteht und somit einen Kontaktstecker zum Anschluss einer Kontaktbuchse bildet. Analog hierzu kann in den ersten Bohrungsabschnitt 22.1 eine Steckbuchse mit einem daran angeschlossenen elektrischen Leiter zur Herstellung einer elektrisch leitenden Verbindung mit dem Kontaktstiftelement 24 in den ersten Bohrungsabschnitt 22.1 steuerseitig eingeführt werden, wobei der elektrische Leiter über die ersten Bohrungen 22 an das jeweilige Kontaktstiftelement 24 geführt wird.

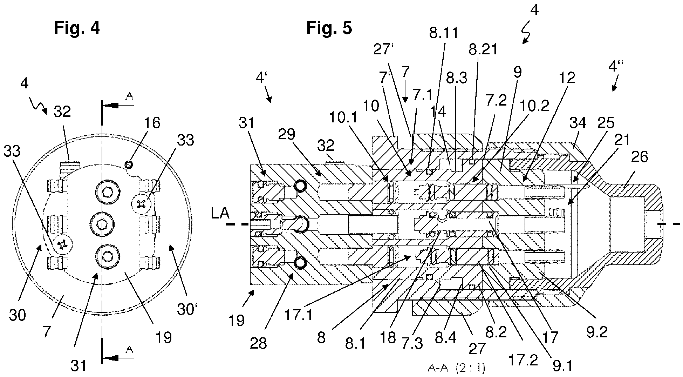

Zum Anschluss des Versorgungsschlauches 6 bzw. der darin aufgenommen Schläuche und elektrischen Verbindungskabel an die Kupplungsvorrichtung 4 schließt sich in der Kupplungsvorrichtung 4 schlauchseitig an den zweiten Kupplungskörper 9 eine schlauchseitiges Adapterkupplungselement 26 an, welches vorzugsweise Teil des Versorgungsschlauches 6 ist. Dieses ist auf das schlauchseitige Ende des zweiten Kupplungskörpers 9 aufsteckbar, und zwar vorzugsweise derart, dass dieses zumindest freiendseitig noch teilweise von der Kupplungsmuffe 7 aufgenommen ist. Hierzu weist der zweite Kupplungskörper 9 in der in Figur 3, 5 und 7 dargestellten Ausführungsvariante beispielweise einen ersten und zweiten Kupplungskörperabschnitt 9.1, 9.2 auf, welche unterschiedliche Außendurchmesser besitzen. Der Außendurchmesser des ersten Kupplungskörperabschnittes 9.1 ist größer als der des zweiten Kupplungskörperabschnittes 9.2, wobei der erste Kupplungskörperabschnittes 9.1 in der Kupplungsmuffe 7 geführt ist und der zweite Kupplungskörperabschnitt 9.2 hinsichtlich seines Außendurchmessers derart bemessen ist, dass eine klemmende Aufnahme des Adapterkupplungselementes 26 zwischen der Außenfläche des zweiten Kupplungskörperabschnittes 9.2 und der Innenfläche des freien Endes der Kupplungsmuffe 7 erfolgt.

Die den ersten und zweiten Kupplungskörper 8,9 miteinander verbindende Kupplungsmuffe 7 weist am steuerseitigen Ende einen axial nach außen abstehenden, umlaufende Randabschnitt 7' auf, welcher eine seitliche, ringförmige Anlagefläche bildet, an der das Gehäuse der Versorgungs- und Steuereinheit 2 anliegt. An den umlaufenden Randabschnitt 7' schließt sicht ein im Querschnitt reduzierter Muffenabschnitt 7" an, welcher vorzugsweise an der Außenfläche ein Schraubgewinde aufweist. Auf das Schraubgewinde ist eine Mutterelement 27 aufschraubbar ist. Damit ist eine klemmende Befestigung der Kupplungsvorrichtung 4 in einer kreisförmigen Ausnehmung der Gehäusewand oder dergleichen ebenen Befestigungsfläche der Versorgungs- und Steuereinheit 2 möglich. Die Befestigung erfolgt hierbei durch Verschrauben des Mutterelementes 27 mit der Kupplungsmuffe 7, sodass ein Klemmsitz zwischen dem Randbereich 7' der Kupplungsmuffe 7 und dem Randbereich 27' des Mutterelementes 27 entsteht.

An das Mutterelement 27 schließt sich entlang der Längsachse LA in Richtung des schlauchseitigen Anschlussbereiches 4" eine Befestigungshülse 34 an, welche ebenfalls auf das Außengewinde der Kupplungsmuffe 7 aufschraubbar ist. Die Befestigungshülse 34 nimmt ferner das Adapterkupplungselement 26 auf und durch Verschrauben dessen mit der Kupplungsmuffe 7 wird das Adapterkupplungselement 26 auf das stirnseitige freie Ende der der Kupplungsmuffe 7 gepresst und ein Klemmverbindung zwischen zweitem Kupplungskörper 9, Adapterkupplungselement 26 und schlauchseitigen reduzierten Muffenabschnitt 7" der Kupplungsmuffe 7 hergestellt.

In einer bevorzugten Ausführungsvariante der Erfindung weist die Kupplungseinrichtung 4 ein Anschlussadapterelement 19 auf, über welches zumindest die Zuführung der Fluida in die ersten Fluidkanäle 10 des einen Ventilkolben bildenden ersten Kupplungskörpers 8 erfolgt. In den Figuren 2 bis 7 ist beispielhaft eine mögliche Realisierungsform eines derartigen Anschlussadapterelementes 19 dargestellt.

Bei der vorliegenden Ausführungsvariante weist das Anschlussadapterelement 19 drei senkrecht zur Längsachse LA verlaufenden Durchführungskanäle 28, an deren gegenüberliegenden Öffnungen jeweils Anschlussnippel 30, 30' zumindestteilweise aufgenommen sind. Die senkrecht zur Längsachse LA verlaufenden Durchführungskanäle 28 sind jeweils mit parallel zur Längsachse LA verlaufenden Zuführungskanälen 29 verbunden, welche zur Verbindung mit den Verbindungsnippelelementen 20 des ersten Kupplungskörpers 8 achs- und positionsgleich zu den ersten Fluidkanälen 10 angeordnet sind.

Über die Durchführungskanäle 28 werden beispielsweise die Fluida Wasser, Antriebs- und Blasluft an die Zuführungskanäle 29 geführt, wobei hierbei vorzugsweise im Bereich der Kreuzungspunkte der Durchführungs- und Zuführungskanäle 28, 29 jeweils Dosiermittel 31 vorgesehen sein können, über welche die Zuführmenge der jeweils zuführbaren Fluida einstellbar ist.

Schließlich verfügt das Anschlussadapterelement 19 noch über einen Auslassnippel 32, welcher über einen weiteren Zuführungskanal (nicht in den Figuren dargestellt) mit dem im ersten Kupplungskörper 8 vorgesehenen weiteren Fluidkanal verbindbar ist.

Das Anschlussadapterelement 19 ist vorzugsweise fest mit der steuerseitigen Stirnseite des ersten Kupplungskörpers 8 verbunden, und zwar vorzugsweise mittels lösbaren Verbindungsmitteln wie beispielsweise Schrauben 33.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: zahnmedizinische Vorrichtung
- 2: Versorgungs- und Steuereinheit
- 3: fahrbarer Wagen
- 4: Kupplungsvorrichtung
- 4': steuerseitiger Anschlussbereich
- 4": schlauchseitiger Anschlussbereich
- 5: zahnärztliches Instrument
- 6: Versorgungsschlauch
- 7: Kupplungsmuffe
- 7': Randbereich
- 7": reduzierter Muffenbereich
- 7.1: erster Kupplungsmuffenabschnitt
- 7.2: zweiter Kupplungsmuffenabschnitt
- 7.3: ringförmige Anschlagfläche
- 8: erster Kupplungskörper
- 8.1: erster Kupplungskörperabschnitt
- 8.11: Führungsnut
- 8.2: zweiter Kupplungskörperabschnitt
- 8.21: Führungsnut
- 8.3: äußere umlaufende Nut
- 8.4: ringförmige Anschlagfläche
- 9: zweiter Kupplungskörper
- 9.1: erster Kupplungskörperabschnitt
- 9.2: zweiter Kupplungskörperabschnitt
- 10: erste Fluidkanäle
- 10.1: erster Kanalabschnitt
- 10.2: zweiter Kanalabschnitt
- 11: erste elektrische Steckverbindungen
- 12: zweite Fluidkanäle
- 13: zweite elektrische Steckverbindungen
- 14: ringförmiger Ventilraum
- 15: Bohrung
- 16: Doppelnippel
- 17: stabförmige Ventilkolben
- 17.1: erster Ventilkolbenabschnitt
- 17.2: zweiter Ventilkolbenabschnitt
- 18: Zulaufbohrung
- 19: Anschlussadapterelement
- 20: Verbindungsnippelelemente
- 21: Verbindungsnippelelemente
- 22: erste Bohrungen
- 23: zweite Bohrungen
- 24: Kontaktstiftelement
- 25: Kontaktbuchselement
- 26: Adapterkupplungselement
- 27: Mutterelement
- 27': Randbereich
- 28: Durchführungskanäle
- 29: Zuführungskanäle
- 30, 30': Anschlussnippel
- 31: Dosiermittel
- 32: Auslassnippel
- 33: Schrauben
- 34: Befestigungshülse

- LA: Längsachse

## Patentansprüche

1. Kupplungsvorrichtung (4) zur Verbindung eines Versorgungsschlauches (6) für
zahnmedizinische Instrumente (5) mit einer Versorgungs- und Steuereinheit (2) umfassend eine Kupplungsmuffe (7), in der zumindest teilweise ein erster Kupplungskörper (8) und ein zweiter Kupplungskörper (9) entlang der Längsachse (LA) der Kupplungsmuffe (7) aufgenommen sind, wobei der erste und zweite Kupplungskörper (8, 9) jeweils mehrere Fluidkanäle und elektrische Steckverbindungen aufweisen, wobei die Kupplungsvorrichtung (4) in Form einer schaltbaren Ventil-Kupplung ausgebildet ist, **dadurch gekennzeichnet, dass** der erste Kupplungskörper (8) einen in der Kupplungsmuffe (7) geführten Ventilkolbenkörper bildet, der durch Beaufschlagung mit Druckluft axial verschiebbar ist.

2. Kupplungsvorrichtung nach Anspruch 1, **dadurch gekennzeichnet, dass** der zweite Kupplungskörper (9) ortsfest in der Kupplungsmuffe (7) aufgenommen ist.

3. Kupplungsvorrichtung nach Anspruch 1 oder 2, **dadurch gekennzeichnet, dass** im ersten Kupplungskörper (8) erste Fluidkanäle (10) und im zweiten Kupplungskörper (9) zweite Fluidkanäle (12) vorgesehen sind, die sich jeweils entlang der Längsachsen (LA) der Kupplungskörper (8, 9) achsgleich zueinander erstrecken und/oder dass in den ersten und zweiten Fluidkanälen (10, 12) jeweils abschnittweise ein stabförmiger Ventilkolben (17) mit einem ersten und zweiten Ventilkolbenabschnitt (17.1, 17.2) aufgenommen ist.

4. Kupplungsvorrichtung nach einem der Ansprüche 1 bis 3, **dadurch gekennzeichnet, dass** im nicht durchgeschalteten Betriebszustand der Kupplungsvorrichtung (4) der erste Kupplungskörper (8) beabstandet zum zweiten Kupplungskörper (9) in der Kupplungsmuffe (7) angeordnet ist, wobei der erste Kupplungskörper (8) durch Beaufschlagung mit einer Vorspannung in dieser Position gehalten wird.

5. Kupplungsvorrichtung nach Anspruch 3 oder 4, **dadurch gekennzeichnet, dass** in einer steuerseitigen Wandung der Kupplungsmuffe (7) eine Bohrung (15) zur Zuführung der Druckluft bzw. Steuerluft in einen durch die Kupplungsmuffe (7) und den ersten Kupplungskörper (8) eingeschlossenen ringförmigen Ventilraumes (14) vorgesehen ist, die sich entlang der Längsachse (LA) von der steuerseitigen Stirnseite der Kupplungsmuffe (7) zum ringförmigen Ventilraum (14) erstreckt und/oder dass der stabförmige Ventilkolben (17) über eine Innenbohrung verfügt, die sich entlang der Kolbenlängsachse erstreckt, und zwar ausgehend von einer quer zur Kolbenlängsachse verlaufende Zulaufbohrung (18) mit zwei gegenüberliegenden Zulauföffnungen und einer stirnseitigen Auslauföffnung.

6. Kupplungsvorrichtung nach Anspruch 5, **dadurch gekennzeichnet, dass** der die beiden seitlichen Zulauföffnungen aufweisende erste Ventilkolbenabschnitt (17.1) in einem Fluidkanal (10) des ersten Kupplungskörpers (8) und der die stirnseitige Auslauföffnung aufweisende zweite Ventilkolbenabschnitt (17.2) im achsgleich angeordneten Fluidkanal (12) des zweiten Kupplungskörpers (9) zumindest teilweise aufgenommen und/oder dass abhängig von der Kolbenposition des als Ventilkolbenkörper ausgebildeten ersten Kupplungskörpers (8) die Zulauföffnungen des ersten Ventilkolbenabschnittes (17.1) freigegeben oder fluiddicht verschlossen sind.

7. Kupplungsvorrichtung nach Anspruch 6, **dadurch gekennzeichnet, dass** die im ersten Kupplungskörper (8) vorgesehenen ersten Fluidkanäle (10) jeweils einen ersten Kanalabschnitt (10.1) und einen unmittelbar daran anschließenden zweiten Kanalabschnitt (10.2) aufweisen, wobei der Innendurchmesser des ersten Kanalabschnittes (10.1) größer als der Innendurchmesser des zweiten Kanalabschnittes (10.2) gewählt ist und/oder dass im nicht durchgeschalteten Betriebszustand sich die Zulauföffnungen des ersten Ventilkolbenabschnittes (17.1) jeweils im Bereich des zweiten Kanalabschnittes (10.2) befinden und damit verschlossen sind.

8. Kupplungsvorrichtung nach einem der Ansprüche 6 oder 7, **dadurch gekennzeichnet, dass** im durchgeschalteten Betriebszustand sich die Zulauföffnungen des ersten Ventilkolbenabschnittes (17.1) im Bereich des ersten Kanalabschnittes (10.1) befinden und damit freigegeben sind und/oder dass der stabförmige Ventilkolben (17) mit seinem zweiten Ventilkolbenabschnitt (17.2) lage- oder positionsfest im jeweils zweiten Fluidkanal (12) des zweiten Kupplungskörpers (9) aufgenommen ist.

9. Kupplungsvorrichtung nach einem der Ansprüche 1 bis 8, **dadurch gekennzeichnet, dass** zur Herstellung der elektrischen Steckverbindungen (11, 13) der erste und zweite Kupplungskörper (8, 9) parallel zu den ersten und zweiten Fluidkanälen (10, 12) verlaufende, ebenfalls achsgleich angeordnete erste und zweite Bohrungen (22, 23) aufweisen, wobei jeweils in der ersten Bohrung (22) ein Kontaktstiftelement (24) und in der gegenüberliegenden achsgleichen zweiten Bohrung (23) ein Kontaktbuchsenelement (25) angeordnet sind.

10. Kupplungsvorrichtung nach einem der Ansprüche 1 bis 9, **dadurch gekennzeichnet, dass** der zweite Kupplungskörper (9) einen ersten und zweiten Kupplungskörperabschnitt (9.1, 9.2) mit unterschiedlichen Außendurchmessern aufweist, wobei der Außendurchmesser des ersten Kupplungskörperabschnittes (9.1) größer als der des zweiten Kupplungskörperabschnittes (9.2) ist und wobei der erste Kupplungskörperabschnitt (9.1) in der Kupplungsmuffe (7) geführt ist.

11. Kupplungsvorrichtung nach einem der Ansprüche 1 bis 10, **dadurch gekennzeichnet, dass** sich an den zweiten Kupplungskörper (9) schlauchseitig ein schlauchseitiges Adapterkupplungselement (26) anschließt, welches Teil des Versorgungsschlauches (6) ist und/oder dass die Kupplungsmuffe (7) einen umlaufenden Randabschnitt (7') und einen daran anschließenden im Querschnitt reduzierten Muffenabschnitt (7") aufweist, welcher an der Außenfläche ein Schraubgewinde aufweist, auf das ein Mutterelement (27) aufschraubbar ist, wobei an das Mutterelement (27) entlang der Längsachse (LA) in Richtung eines schlauchseitigen Anschlussbereiches (4") eine Befestigungshülse (34) anschließt, welche ebenfalls auf das Außengewinde der Kupplungsmuffe (7) aufschraubbar ist.

12. Kupplungsvorrichtung nach einem der Ansprüche 1 bis 11, **gekennzeichnet durch** ein steuerseitig angeordnetes Anschlussadapterelement (19), über welches zumindest die Zuführung der Fluida in die ersten Fluidkanäle (10) des einen Ventilkolben bildenden ersten Kupplungskörpers (8) erfolgt, wobei das Anschlussadapterelement (19) senkrecht zur Längsachse (LA) verlaufende Durchführungskanäle (28) aufweist, die jeweils mit parallel zur Längsachse (LA) verlaufenden Zuführungskanälen (29) verbunden sind, welche achs- und positionsgleich zu den ersten Fluidkanälen (10) des ersten Kupplungskörpers (8) angeordnet sind.

13. Kupplungsvorrichtung nach Anspruch 12, **dadurch gekennzeichnet, dass** im Bereich der Kreuzungspunkte der Durchführungs- und Zuführungskanäle (28, 29) jeweils Dosiermittel (31) vorgesehen sind, über welche die Zuführmenge des jeweils zugeführten Fluides einstellbar ist.

14. Kupplungsvorrichtung nach einem der Ansprüche 1 bis 13, **dadurch gekennzeichnet, dass** zumindest drei erste Fluidkanäle (10) im ersten Kupplungskörper (8) und zumindest drei zweite Fluidkanäle (12) im zweiten Kupplungskörper (9) zur Durchführung von Wasser, Antriebsluft und Blasluft durch die Kupplungsvorrichtung (4) vorgesehen sind.

## Claims

1. Coupling device (4) for connecting a supply hose (6) for dental instruments (5) with a supply and control unit (2), comprising a coupling sleeve (7) in which at least partly a first coupling body (8) and a second coupling body (9) are received along the longitudinal axis (LA) of the coupling sleeve (7), wherein the first and second coupling bodies (8, 9) each have several fluid channels and electrical plug-type connections, wherein the coupling device (4) is designed in the form of a switchable valve coupling, **characterised in that** the first coupling body (8) forms a valve piston body guided in the coupling sleeve (7) which can be axially displaced by application of compressed air.

2. Coupling device according to claim 1 **characterised in that** the second coupling body (9) is fixedly received in the coupling sleeve (7).

3. Coupling device according to claim 1 or 2 **characterised in that** provided in the first coupling body (8) are first fluid channels (10) and provided in the second coupling body (9) are second fluid channels (12) which respectively extend coaxially to each other along the longitudinal axes (LA) of the coupling bodies (8, 9) and/or **in that** a rod-shaped valve piston (17) with a first and second valve piston section (17.1, 17.2) is received in sections in each of the first and second fluid channels (10, 12).

4. Coupling device according to any one of claims 1 to 3 **characterised in that** in a non-interconnected operating mode of the coupling device (4), the first coupling body (8) is arranged at a distance from the second coupling body (9) in the coupling sleeve (7), wherein the first coupling body (8) is held in this position by application of a pretensioning force.

5. Coupling device according to claim 3 or 4 **characterised in that** provided in a wall on the control side of the coupling sleeve (7) is a boring (15) for supplying compressed air or control air into an annual valve chamber (14) enclosed by the coupling sleeve (7) and the first coupling body (8), said boring extending along the longitudinal axis (LA) from the end face of the coupling sleeve (7) on the control side to the annular valve chamber (14) and/or **in that** the rod-shaped valve piston (17) has an inner boring which extends along the longitudinal axis of the piston, namely starting from an inlet boring (18) extending transversely to the longitudinal axis of the piston with two opposite inlet openings and an outlet opening at the end face.

6. Coupling device according to claim 5 **characterised in that** the first valve piston section (17.1) having the two lateral inlet openings is at least partially received in a fluid channel (10) of the first coupling body (8) and the second valve piston section (17.2) having the outlet opening at the end face is at least partially received in the coaxially arranged fluid channel (12) of the second coupling body (9) and/or **in that** depending on the piston position of the first coupling body (8) designed as a valve piston body, the inlet openings of the first valve piston section (17.1) are cleared or closed in a fluid-tight manner.

7. Coupling device according to claim 6 **characterised in that** the first fluid channels (10) provided in the first coupling body (8) each have a first channel section (10.1) and immediately adjoining this a second channel section (10.2), wherein the inner diameter of the first channel section (10.1) is selected to be larger than the inner diameter of the second channel section (10.2) and/or **in that** in the non-interconnected operating mode the inlet openings of the first valve piston section (17.1) are each located in the area of the second channel section (10.2) and are closed therewith.

8. Coupling device according to any one of claims 6 or 7 **characterised in that** in the interconnected operating mode the inlet openings of the first valve piston section (17.1) are located in the area of the first channel section (10.1) and are cleared therewith and/or **in that** the rod-shaped valve piston (17) is held with its second valve piston section (17.2) fixed in position in the respective second fluid channel (12) of the second coupling body (9).

9. Coupling device according to any one of claims 1 to 8 **characterised in that** for establishing the electrical plug connections (11, 13), the first and second coupling body (8, 9) have first and second borings (22, 23), also coaxially arranged, running in parallel to the first and second fluid channels (10, 12), wherein in each case in the first boring (22) a contact pin element (24) and in the opposite coaxial second boring (23) a contact socket element (25) are arranged.

10. Coupling device according to any one of claims 1 to 9 **characterised in that** the second coupling body (9) has a first and a second coupling body section (9.1, 9.2) with different outer diameters, wherein the outer diameter of the first coupling body section (9.1) is larger than that of the second coupling body section (9.2) and wherein the first coupling body section (9.1) is guided in the coupling sleeve (7).

11. Coupling device according to any one of claims 1 to 10 **characterised in that** a hose-side adapter coupling element (26) adjoins the second coupling body (9) on the hose side and is part of the supply hose (6) and/or **in that** the coupling sleeve (7) has a circumferential edge section (7') and, adjoining this, a sleeve section (7") reduced in cross-section, which on the outer surface has a screw thread onto which a nut element (27) can be screwed, wherein on the nut element (27) along the longitudinal axis (LA) in the direction of the hose-side connection area (4") a fastening sleeve (34) is connected which can also be screwed onto the outer thread of the coupling sleeve (7).

12. Coupling device according to any one of claims 1 to 11 **characterised by** a connection adapter element (19) arranged on the control side, via which at least the supply of the fluids into the first fluid channels (10) of the first coupling section (8) forming a valve piston takes place, wherein the connection adapter element (19) has transfer channels (28) which run perpendicularly to the longitudinal axis (LA) and are each connected to supply channels (29) running in parallel to the longitudinal axis (LA) which are arranged coaxially to and in the same position as the first fluid channels (10) of the first coupling body (8).

13. Coupling body according to claim 12 **characterised in that** in the area of the crossing points of the transfer and supply channels (28, 29) dosing means (31) are provided in each case via which the quantity of the respective fluid being supplied can be adjusted.

14. Coupling device according to any one of claims 1 to 13 **characterised in that** at least three first fluid channels (10) are provided in the first coupling body (8) and at least three second fluid channels (12) are provided in the second coupling body (9) for transferring water, actuating air and blowing air through the coupling device (4).

## Revendications

1. Dispositif de couplage (4) pour relier un tuyau d'alimentation (6) pour des instruments de médecine dentaire (5) à une unité d'alimentation et de commande (2) comprenant un manchon de couplage (7), dans lequel un premier corps de couplage (8) et un second corps de couplage (9) sont reçus au moins partiellement le long de l'axe longitudinal (LA) du manchon de couplage (7), dans lequel les premier et second corps de couplage (8, 9) présentent respectivement plusieurs canaux de fluide et connecteurs électriques, dans lequel le dispositif de couplage (4) est conçu sous forme de couplage-soupape pouvant être connecté, **caractérisé en ce que** le premier corps de couplage (8) forme un corps de piston de soupape dirigé dans le manchon de couplage (7), qui est mobile axialement par fourniture d'air comprimé.

2. Dispositif de couplage selon la revendication 1, **caractérisé en ce que** le second corps de couplage (9) est reçu de manière fixe dans le manchon de couplage (7).

3. Dispositif de couplage selon la revendication 1 ou 2, **caractérisé en ce que** des premiers canaux de fluide (10) sont prévus dans le premier corps de couplage (8) et des seconds canaux de fluide (12) sont prévus dans le corps de couplage (9), qui s'étendent respectivement l'un vers l'autre à axe égal le long des axes longitudinaux (LA) des corps de couplage (8, 9) et/ou que dans les premiers et seconds canaux de fluide (10, 12), un piston de soupape (17) en forme de barre est reçu respectivement par tronçons avec un premier et un second tronçon de piston de soupape (17.1, 17.2).

4. Dispositif de couplage selon l'une des revendications 1 à 3, **caractérisé en ce que** dans l'état de service non connecté du dispositif de couplage (4), le premier corps de couplage (8) est disposé à distance du second corps de couplage (9) dans le manchon de couplage (7), dans lequel le premier manchon de couplage (8) est maintenu dans cette position par fourniture d'une précontrainte.

5. Dispositif de couplage selon la revendication 3 ou 4, **caractérisé en ce que** dans une paroi côté commande du manchon de couplage (7), il est prévu un perçage (15) pour alimenter l'air comprimé, respectivement l'air de commande, dans un espace de soupape (14) annulaire enchâssé par le manchon de couplage (7) et le premier corps de couplage (8), lequel s'étend le long de l'axe longitudinal (LA) de la face avant côté commande du manchon de couplage (7) vers l'espace de soupape (14) annulaire et/ou que le piston de soupape (17) en forme de barre dispose d'un perçage intérieur qui s'étend le long de l'axe longitudinal de piston, et ce en partant d'un perçage d'alimentation (18) transversal à l'axe longitudinal de piston avec deux ouvertures d'alimentation opposées et une ouverture d'échappement côté avant.

6. Dispositif de couplage selon la revendication 5, **caractérisé en ce que** le premier tronçon de piston de soupape (17.1) présentant les deux ouvertures d'alimentation latérales est reçu au moins partiellement dans un canal de fluide (10) du premier corps de couplage (8), et le second tronçon de piston de soupape (17.2) présentant l'ouverture d'échappement côté avant est reçu au moins partiellement dans le canal de fluide (12), disposé à axe égal, du second corps de couplage (9) et/ou qu'en fonction de la position du piston du premier corps de couplage (8) formé en tant que corps de piston de couplage, les ouvertures d'alimentation du premier tronçon de piston de soupape (17.1) sont libérées ou fermées en étanchéité aux fluides.

7. Dispositif de couplage selon la revendication 6, **caractérisé en ce que** les premiers canaux de fluide (10) prévus dans le premier corps de couplage (8) présentent respectivement un premier tronçon de canal (10.1) et un second tronçon de canal (10.2) se raccordant directement dessus, dans lequel le diamètre intérieur du premier tronçon de canal (10.1) est choisi supérieur au diamètre intérieur du second tronçon de canal (10.2) et/ou que dans l'état non connecté, les ouvertures d'alimentation du premier tronçon de piston de soupape (17.1) se trouvent respectivement au niveau du second tronçon de canal (10.2) et enfermés avec celui-ci.

8. Dispositif de couplage selon la revendication 6 ou 7, **caractérisé en ce que** dans l'état connecté, les ouvertures d'alimentation du premier tronçon de piston de soupape (17.1) se trouvent au niveau du premier tronçon de canal (10.1) et sont ainsi libérées et/ou que le piston de soupape (17) en forme de barre avec son second tronçon de piston de soupape (17.2) est reçu en position fixe dans le second canal de fluide (12) respectif du second corps de couplage (9).

9. Dispositif de couplage selon l'une des revendications 1 à 8, **caractérisé en ce que** pour créer les connexions électriques (11, 13), les premier et second corps de couplage (8, 9) présentent des premier et second perçages (22, 23) disposés également à axe égal, parallèlement aux premiers et seconds canaux de fluide (10, 12), dans lequel respectivement un élément de contact mâle (24) est disposé dans le premier perçage (22) et un élément de contact femelle (25) est disposé dans le second perçage (23) opposé à axe égal.

10. Dispositif de couplage selon l'une des revendications 1 à 9, **caractérisé en ce que** le second corps de couplage (9) présente des premier et second tronçons de corps de couplage (9.1, 9.2) avec différents diamètres extérieurs, dans lequel le diamètre extérieur du premier tronçon de corps de couplage (9.1) est supérieur à celui du second tronçon de corps de couplage (9.2), et dans lequel le premier tronçon de corps de couplage (9.1) est dirigé dans le manchon de couplage (7).

11. Dispositif de couplage selon l'une des revendications 1 à 10, **caractérisé en ce qu'**un élément de couplage adaptateur (26) côté tuyau se raccorde côté tuyau au second corps de couplage (9) et fait partie du tuyau d'alimentation (6) et/ou que le manchon de couplage (7) présente un tronçon de bord périphérique (7') et un tronçon de manchon (7") à section réduite se raccordant dessus, lequel présente un filet de vissage sur la surface extérieure sur lequel un élément d'écrou (27) peut être vissé, dans lequel un manchon de fixation (34) se raccorde sur l'élément d'écrou (27) le long de l'axe longitudinal (LA) en direction d'une partie de raccordement (4") côté tuyau, lequel peut être également vissé sur le filetage mâle du manchon de couplage (7).

12. Dispositif de couplage selon l'une des revendications 1 à 11, **caractérisé par** un élément adaptateur de raccord (19) disposé côté commande, par lequel au moins l'arrivée des fluides s'effectue dans les premiers canaux de fluide (10) du premier corps de couplage (8) formant un piston de soupape, dans lequel l'élément adaptateur de raccord (19) présente des canaux de passage (28) verticaux par rapport à l'axe longitudinal (LA), qui sont reliés respectivement à des canaux d'alimentation (29) parallèles à l'axe longitudinal (LA), qui sont disposés à axe et positions égaux par rapport aux premiers canaux de fluide (10) du premier corps de couplage (8) .

13. Dispositif de couplage selon la revendication 12, **caractérisé en ce que** des moyens de dosage (31) respectifs sont prévus au niveau des points de croisement des canaux de passage et d'alimentation (28, 29), par lesquels la quantité d'alimentation du fluide respectif alimenté peut être réglée.

14. Dispositif de couplage selon l'une des revendications 1 à 13, **caractérisé en ce qu'**au moins trois premiers canaux de fluide (10) sont prévus dans le premier corps de couplage (8) et au moins trois seconds canaux de fluide (12) sont prévus dans le second corps de couplage (9) pour amener de l'eau, de l'air d'entraînement et de l'air soufflé à travers le dispositif de couplage (4).
